# EUROPÄISCHE PATENTSCHRIFT

(11) **EP 3 468 939 B1**
(45) Veröffentlichungstag und Bekanntmachung des Hinweises auf die Patenterteilung: **22.04.2020**
(21) Anmeldenummer: 17732339.1
(22) Anmeldetag: 08.06.2017
(51) Int. Cl.: C04B 35/119, C04B 35/48, C04B 35/482, C04B 35/488, C04B 35/622, C04B 35/626, C04B 35/636, C04B 35/65, C04B 35/185, C04B 38/00, C04B 38/06

(54) **ZIRKONOXID-KERAMIK, ZELLULARER WERKSTOFF DARAUS UND VERFAHREN ZUR HERSTELLUNG DER ZIRKONOXID-KERAMIK**
ZIRCONIA CERAMIC, CELLULAR BODY THEREFROM AND PROCESS FOR THE MANUFACTURE OF THE ZIRCONIA CERAMIC
ZIRCONE CERAMIQUE, CORPS CELLULAIRE DE CELUI-CI ET PROCÉDÉ DE FABRICATION DE LA CERAMIQUE EN ZIRCONE

(30) Priorität: 10.06.2016 DE 102016210378
(43) Veröffentlichungstag der Anmeldung: 17.04.2019
(73) Patentinhaber: Fraunhofer-Gesellschaft zur Förderung der angewandten Forschung e.V., 80686 München (DE)
(72) Erfinder: ADLER, Jörg, 01662 Meißen (DE); STANDKE, Gisela, 01099 Dresden (DE); HAASE, Daniela, 01309 Dresden (DE)
(74) Vertreter: Rauschenbach, Marion
(86) Internationale Anmeldenummer: PCT/EP2017/063894
(87) Internationale Veröffentlichungsnummer: WO 2017/211920

(56) Entgegenhaltungen:
- GARRIDO L B ET AL: "Mullite-zirconia composites: Effect of citric acid addition on slip and cast properties", JOURNAL OF MATERIALS SCIENCE, KLUWER ACADEMIC PUBLISHERS, BO, Bd. 40, Nr. 19, 1. Oktober 2005 (2005-10-01), Seiten 5161-5166, XP019210775, ISSN: 1573-4803, DOI: 10.1007/S10853-005-4406-1
- EBENER S ET AL: "Reactions and Phase Transformation in SiO2-ZrO2 Sol-Gel Coated Alumina Powder", JOURNAL OF THE EUROPEAN CERAMIC SOCIETY, ELSEVIER SCIENCE PUBLISHERS, BARKING, ESSEX, GB, Bd. 16, Nr. 11, 1. Januar 1996 (1996-01-01), Seiten 1179-1188, XP004047427, ISSN: 0955-2219, DOI: 10.1016/0955-2219(96)00050-7
- RENDTORFF N M ET AL: "Thermal shock behavior of dense mullite-zirconia composites obtained by two processing routes", CERAMICS INTERNATIONAL, ELSEVIER, AMSTERDAM, NL, Bd. 34, Nr. 8, 1. Dezember 2008 (2008-12-01), Seiten 2017-2024, XP025479773, ISSN: 0272-8842, DOI: 10.1016/J.CERAMINT.2007.07.035 [gefunden am 2008-10-01]
- LATHABAI S ET AL: "REACTION-BONDED MULLITE/ZIRCONIA COMPOSITES", JOURNAL OF THE AMERICAN CERAMIC SOCIETY, BLACKWELL PUBLISHING, MALDEN, MA, US, Bd. 79, Nr. 1, 1. Januar 1996 (1996-01-01) , Seiten 248-256, XP000583493, ISSN: 0002-7820, DOI: 10.1111/J.1151-2916.1996.TB07905.X

## Beschreibung

Die Erfindung bezieht sich auf die Gebiete der Keramik und Metallurgie und betrifft eine Zirkonoxid-Keramik und einen zellularen Werkstoff daraus, wie sie beispielsweise als Feuerfestwerkstoff in der Metallurgie oder als Gießfilter für den Stahl-Formguss zum Einsatz kommen können, sowie ein Verfahren zur Herstellung der Zirkonoxid-Keramik.

Hoch temperaturstabile Keramik wird beispielsweise als Gussformen oder Gießfilter in den Einsatzgebieten Metallurgie und Feuerfestindustrie angewandt. Diese Keramiken kommen dabei in den direkten und plötzlichen Kontakt mit sehr heißen Metallschmelzen und können dann ihre vorteilhaften Eigenschaften insbesondere hinsichtlich der Temperaturstabilität ausnutzen. So werden Formteile aus Stahlguss in der Gießerei bei ca. 1600-1650°C Schmelzentemperatur bereits durch Filter aus Zirkonoxid-Keramik in die Gießform gegossen. Als Filter wird die Zirkonoxid-Keramik in der Form eines zellulären Werkstoffs verwendet, hauptsächlich in Form von sogenannter offenzelliger Schaumkeramik, extrudierten Wabenkörpern oder gepressten Siebkernen.

Zirkonoxid-Keramik oder hoch zirkonoxidhaltige Keramik gibt es in einer großen Bandbreite von unterschiedlichen Werkstoffen. Typischerweise wird Zirkonoxid-Keramik durch die Versinterung von feinem Zirkonoxid-Pulver unter Verwendung von Sinter- und Stabilisierungsadditiven hergestellt. In den o.g. Anwendungsgebieten werden selten reine Zirkonoxid-Keramiken eingesetzt, sondern meistens Mischkeramiken mit einem hohen Zirkonoxidanteil, da nahezu reine Zirkonoxid-Keramiken teuer und kompliziert herzustellen sind und insofern für Feuerfestanwendungen nicht zur Anwendung kommen. Häufige Bestandteile von Feuerfestkeramiken sind neben Zirkonoxid Siliciumoxid und Aluminiumoxid. Die Zusammensetzung wird in der chemischen Summenformel ausgedrückt.

Entscheidend für die Eigenschaften sind aber die auftretenden Gefügebestandteile, die sich aus verschiedenen kristallinen Zusammensetzungen von Verbindungen im Dreiphasendiagramm ZrO₂-Al₂O₃-SiO₂ und aus glasigen Bestandteilen aufbauen. Von Bedeutung sind hierbei die kristallinen Verbindungen Zirkonoxid ZrO₂, Aluminiumoxid Al₂O₃, Zirkonsilikat ZrSiO₄ (üblicherweise Zirkon genannt), und Aluminiumsilikat Al₆Si₂O₁₃ (Mullit).

Das Dokument" Mullite-Zirconia Composites: Effects Of Citric Acid Addition On Slip And Cast Properties " von L.B. Garrido und E.F. Aglietti aus dem " Journal of Materials Science, Band 40, Seiten 5161-5166, 2005 " offenbart Mullit-Zirkoniumdioxid-Verbundstoffe, die durch Sintern einer Dispersion gemischter Suspensionen von Zirkon und alpha-Aluminiumoxid unter Verwendung von Zitronensäure als Dispergiermittel hergestellt werden.

Es ist z.B. aus Rendtorff, N.M., et al: Ceramics International 34 (2008) 2017, 2024, bekannt, dass sich zirkonoxidhaltige Keramiken auch durch sogenanntes Reaktionssintern aus den Ausgangsstoffen Zirkonsilikat und Aluminiumoxid herstellen lassen, was den Vorteil hat, dass hierzu nicht die relativ teuren und schwer zu verarbeitenden feinen Zirkonoxid-Pulver verwendet werden müssen. Dazu wird Zirkonsilikat (Zirkon) ZrSiO₄ mit Aluminium oder Aluminiumoxid gemischt, geformt und einer Temperaturbehandlung unterzogen. Dabei entsteht über die Reaktionsgleichung

Al₂O₃ + 2 ZrSiO₄ → 3 Al₂O₃ · 2 SiO₂ +ZrO₂,

also ein Composit aus Zirkonoxid und Mullit, sowie zum Teil aus nicht umgesetzten Ausgangstoffen und auch glasigen Bestandteilen. Bei einer stöchiometrischen Reaktion von 54,5 Gew.-% ZrSiO₄ und 45,5 Gew.-% Al₂O₃ entsteht ein Composit aus 36,6 Gew-% ZrO₂ und 63,4 Gew.-% Al₆Si₂O₁₃ (Mullit). Die Gew.-%-Angaben können über die bekannten Reindichten der Verbindungen Zirkonoxid (5,70 g/cm³), Aluminiumoxid (3,94 g/cm³), Zirkonsilikat (4,65 g/cm³) und Mullit (3,16 g/cm³) leicht in Volumenprozent (Vol.-%) umgerechnet werden. Die Angabe von Volumenprozent ist vor allem von Vorteil, wenn es um die Analyse von Gefügebildern und die Interpretation der Wirkung der Gefügebestandteile auf die Eigenschaften der Keramik geht. Die oben angegebene stöchiometrische Reaktion ergibt einen Composit aus 24,3 Vol.-% ZrO₂ und 75,7 Vol.-% Mullit. Der Nachteil solcher Composite besteht darin, dass der hohe Mullitanteil für die Festigkeit und Kriechbeständigkeit unter Hochtemperaturanwendungen ungünstig ist. Es ist aus Lathabai, S. et al, J. Am, Ceram. Soc. 79 (1) 248-56, 1996 bekannt, dass Zusätze von feinem Zirkonoxidpulver zu der Ausgangsmischung aus Zirkonsilikat und Aluminium/Aluminiumoxid eine Verbesserung des Reaktionsumsatzes der Komponenten bewirkt. Jedoch erhöhen sich dadurch auch wieder die Kosten und die Verarbeitungsschwierigkeit der feinen Pulver.

Gießfilter aus zellulärer Keramik (offenzellige Schaumkeramik, extrudierte Waben, gepresste Siebkerne) für den Stahlguss bestehen bekanntermaßen aus hoch zirkonoxidhaltiger Keramik. Am verbreitetsten sind zelluläre Keramiken in der Form von offenzelliger Schaumkeramik, die über den Abformungsprozess (auch Templatprozess genannt) von offenzelligem Polyurethanschaum (US 3,090,094 B-Schwartzwalder) hergestellt werden.

US 3,893,917 B (Alusuisse) beschreibt einen Schaumkeramik-Gießfilter aus Oxidkeramik, z.B. Cr₂O₃, ZrO₂, MgO, TiO₂. JP 62269724 A (Bridgestone) beschreibt einen Gießfilter aus 5-35% ZrO₂ und 95-65% Al₂O₃. US 4,923,830 B (Selee) beschreibt einen Zirkonoxidfilter, US 5,045,511 B einen Filter aus Zirkonoxid, Yttriumoxid und Aluminiumoxid.
Auch von diesen Lösungen nach dem Stand der Technik werden aber die o.g. Probleme bei der Herstellung der Zirkonoxid-Keramik nicht ausgeräumt.

Gemäß US 4,921,616 B (C&C) ist ein Filter für Metallschmelzen bekannt, der zu >90 Gew.-% aus einem Compositmaterial aus ZrO₂ und Mullit besteht, mit den Anteilen 20-40 Gew.-% ZrO₂ und zu 80-60 Gew.-% Mullit (3Al₂O₃/2SiO₂), und mit der chemischen Zusammensetzung mit 20-40 Gew.-% ZrO₂, 50-60 Gew.-% Al₂O₃ und 10-20 Gew.-% SiO₂. Die Verwendung von Zirkonsilikat und Aluminiumoxid als Ausgangsstoffe ist unter anderem in Ausführungsbeispiel 2 genannt. Als Ausgangspulver werden Pulver mit Partikelgrößen von 1-5 µm genannt.

Aber auch bei dieser Lösung des Standes der Technik werden die Probleme bei der Hochtemperaturbeständigkeit von hoch Mullit-haltigen Filtern nicht gelöst und die Verarbeitungsschwierigkeiten bei der Herstellung der Filter nicht verbessert.

Die Aufgabe der Erfindung besteht daher darin, eine Zirkonoxid-Keramik und einen zellularer Werkstoff daraus anzugeben, die eine hohe Festigkeit und Kriechbeständigkeit bei hohen Temperaturen, insbesondere beim Einsatz im Stahlguss, aufweisen, und ein einfaches und kostengünstiges Verfahren zur Herstellung der Zirkonoxid-Keramik anzugeben.

Die Aufgabe wird durch die in den Ansprüchen angegebene Erfindung gelöst. Vorteilhafte Ausgestaltungen sind Gegenstand der Unteransprüche.

Die erfindungsgemäße Zirkonoxid-Keramik besteht aus ≥ 95 Gew.-% Zirkonoxid und Mullit und ≤ 5 Gew.-% Zusätzen, wobei von den ≥ 95 Gew.-% Zirkonoxid und Mullit mindestens 55 bis 90 Gew.-% Zirkonoxid sind, und das Zirkonoxid im Gefüge mit mindestens einer bimodalen Korngrößenverteilung vorliegt, deren Peak-Werte bezüglich der Korngröße mindestens um den Faktor 10 auseinanderliegen, so dass mindestens gröberes und feineres Zirkonoxid im Gefüge vorliegt, und als Zusätze mindestens Bestandteile der eingesetzten Ausgangsstoffe in unveränderter Form oder als Reaktionsprodukte vorliegen.

Vorteilhafterweise liegen 65 bis 85 Gew.-% Zirkonoxid in der Zirkonoxid-Keramik vor.

Ebenfalls vorteilhafterweise liegen vom Gesamtgehalt an Zirkonoxid 50 bis 90 Vol.-%, noch vorteilhafterweise 55 bis75 Vol.-%, an gröberem Zirkonoxid im Gefüge vor.

Weiterhin vorteilhafterweise weist die Korngrößenverteilung des Zirkonoxides im Gefüge mit dem gröberen Peak-Wert mittlere Korngrößen im Bereich zwischen 15 und 200 µm, bevorzugt zwischen 30 und 100 µm auf, und die Korngrößenverteilung des Zirkonoxides im Gefüge mit dem feineren Peak-Wert mittlere Korngrößen im Bereich zwischen 0,5 bis 5 µm, bevorzugt zwischen 1 bis 3 µm auf.

Und auch vorteilhafterweise liegen als Zusätze als Bestandteile der eingesetzten Ausgangsstoffe Zirkonsilikat, Aluminiumoxid oder als Reaktionsprodukte Spinelle oder Cordierit vor.

Der erfindungsgemäße zellulare Werkstoff besteht aus einer Zirkonoxid-Keramik aus ≥ 95 Gew.-% Zirkonoxid und Mullit und ≤ 5 Gew.-% Zusätzen, wobei von den ≥ 95 Gew.-% Zirkonoxid und Mullit mindestens 55 bis 90 Gew.-% Zirkonoxid sind, und das Zirkonoxid im Gefüge mit mindestens einer bimodalen Korngrößenverteilung vorliegt, deren Peak-Werte bezüglich der Korngröße mindestens um den Faktor 10 auseinanderliegen, so dass mindestens gröberes und feineres Zirkonoxid im Gefüge vorliegt, wobei diese Zirkonoxid-Keramik mindestens teilweise das Stegmaterial ist, aus denen die Zellen des zellularen Werkstoffs aufgebaut sind.

Vorteilhaft ist es, wenn die Stege vollständig aus der Zirkonoxid-Keramik bestehen und Hohlräume, Risse und/oder Poren aufweisen.

Weiterhin vorteilhaft ist es, wenn der zellulare Werkstoff in Form einer offenzelligen Schaumkeramik, von extrudierten Wabenkörpern oder von gepressten Siebkernen vorliegt.

Ebenfalls vorteilhaft ist es, wenn 65 bis 85 Gew.-% Zirkonoxid in der Zirkonoxid-Keramik vorliegen.

Und auch vorteilhaft ist es, wenn vom Gesamtgehalt an Zirkonoxid 50 bis 90 Vol.-%, noch vorteilhafterweise 55 bis 75 Vol.-%, an gröberem Zirkonoxid im Gefüge vorliegen.

Von Vorteil ist es auch, wenn die Korngrößenverteilung des Zirkonoxides im Gefüge mit dem gröberen Peak-Wert mittlere Korngrößen im Bereich zwischen 15 und 200 µm, bevorzugt zwischen 30 und 100 µm aufweisen, und die Korngrößenverteilung des Zirkonoxides im Gefüge mit dem feineren Peak-Wert mittlere Korngrößen im Bereich zwischen 0,5 bis 5 µm, bevorzugt zwischen 1 bis 3 µm, aufweisen.

Und auch von Vorteil ist es, wenn als Zusätze als Bestandteile der eingesetzten Ausgangsstoffe Zirkonsilikat, Aluminiumoxid oder als Reaktionsprodukte Spinelle oder Cordierit vorliegen.

Bei dem erfindungsgemäßen Verfahren zur Herstellung einer Zirkonoxid-Keramik wird aus mindestens 30 bis 80 Gew.-% Zirkonoxidpartikel mit einer Partikelgrößenverteilung mit einem höheren d₅₀-Wert und 70 bis 20 Gew.-% einer Mischung aus Zirkonsilikatpulver und Aluminiumoxidpulver, wobei mindestens das Zirkonsilikatpulver eine Partikelgrößenverteilung mit einem niedrigeren d₅₀-Wert als die Zirkonoxidpartikel aufweist, eine Mischung hergestellt, wobei herstellungs- und/oder verarbeitungsbedingte Hilfs- und Zusatzstoffe hinzugefügt werden können, und diese Mischung mindestens teilweise zu einem Formkörper verarbeitet wird, und nachfolgend der Formkörper einer Temperaturbehandlung bei 1400 bis 1750 °C für 1 bis 5 Stunden unterzogen wird.

Vorteilhafterweise wird die Mischung aus Zirkonsilikatpulver und Aluminiumoxidpulver während der Temperaturbehandlung zu Zirkonoxid und Mullit umgesetzt, und die Ausgangsstoffe im stöchiometrischen Verhältnis oder im Masseverhältnis Zirkonsilikatpulver : Aluminiumoxidpulver von 1 : 0,83 eingesetzt werden.

Weiterhin vorteilhafterweise werden als Zirkonoxidpartikel Partikel aus stabilisiertem Zirkonoxid eingesetzt.

Ebenfalls vorteilhafterweise werden Zirkonoxidpartikel mit einer Partikelgrößenverteilung mit einem d₅₀-Wert im Bereich zwischen 15 und 200 µm, bevorzugt zwischen 30 und 100 µm, eingesetzt, und Zirkonsilikatpulver und Aluminiumoxidpulver mit einer Partikelgrößenverteilung mit einem d₅₀-Wert im Bereich zwischen 0,5 bis 5 µm, bevorzugt zwischen 1 bis 3 µm, eingesetzt.

Und auch vorteilhafterweise unterscheiden sich die d₉₀-Werte des Zirkonsilikatpulvers und/oder Aluminiumoxidpulvers von dem d₁₀-Wert des Zirkonoxids um mindestens den Faktor 1,5.

Es ist auch vorteilhaft, wenn als herstellungs- und/oder verarbeitungsbedingte Hilfs- und Zusatzstoffe, Bindemittel, Sinterhilfsmittel, Stabilisierungsmittel eingesetzt werden.

Und auch vorteilhaft ist es, wenn die Mischung zu Formkörpern mittels keramischer Formgebungsverfahren, wie Pressen, Extrudieren, Schlickerguss verarbeitet wird und/oder die Mischung mittels des Schwartzwalder-Verfahren oder mittels Gefriertrocknungsverfahren zu zellularen Werkstoffen verarbeitet wird.

Mit der erfindungsgemäßen Lösung ist es erstmals möglich, eine Zirkonoxid-Keramik und einen zellularer Werkstoff daraus anzugeben, die eine hohe Temperaturbeständigkeit, insbesondere beim Einsatz im Stahlguss, aufweisen, und ein einfaches und kostengünstiges Verfahren zur Herstellung der Zirkonoxid-Keramik anzugeben.

Erreicht wird dies durch eine Zirkonoxid-Keramik, die aus ≥ 95 Gew.-% Zirkonoxid und Mullit und ≤ 5 Gew.-% Zusätzen besteht.
Die Zusätze können Bestandteile der eingesetzten Ausgangsstoffe in unveränderter Form sein oder als deren Reaktionsprodukte vorliegen. So können beispielsweise beim Einsatz von Zirkonsilikatpulver und Aluminiumoxidpulver als Ausgangstoffe zum Reaktionssintern zur Herstellung von Zirkonoxid und Mullit, die Ausgangsstoffe nicht vollständig umgesetzt sein. Es können aber auch beim Einsatz von beispielsweise stabilisiertem Zirkonsilikatpulver auch Spinelle oder andere Glasphasen während der Reaktion entstehen, die dann als Zusätze in der erfindungsgemäßen Zirkonoxid-Keramik vorliegen.

Erfindungswesentlich bei der erfindungsgemäßen Zirkonoxid-Keramik ist jedoch, dass von den ≥ 95 Gew.-% Zirkonoxid und Mullit, woraus die Zirkonoxid-Keramik besteht, 55 bis 90 Gew.-%, vorteilhafterweise 65 bis 85 Gew.-%, Zirkonoxid sind.

Dieser hohe Zirkonoxidanteil muss erfindungsgemäß im Gefüge mit einer bimodalen Korngrößenverteilung vorliegen, deren Peak-Werte bezüglich der Korngröße mindestens um den Faktor 10 auseinanderliegen. Die unterschiedlichen Korngrößenverteilungen sind in Gefügebildern eindeutig erkennbar.
Dabei liegt vorteilhafterweise das gröbere Zirkonoxid zu 50 bis 90 Vol.-% des Gesamtzirkonoxidgehaltes im Gefüge vor.

Durch den hohen Zirkonoxidanteil der erfindungsgemäßen Zirkonoxid-Keramik wird eine hohe Feuerfestigkeit der Werkstoffe aus dieser Keramik erreicht, und durch den hohen Anteil an gröberem Zirkonoxid weist die erfindungsgemäße Zirkonoxid-Keramik eine sehr gute Kriechbeständigkeit auf.

Die erfindungsgemäße bimodale Korngrößenverteilung der Zirkonoxidkörner im Gefüge wird wie folgt beschrieben: Bei der üblichen Auftragung gemäß DIN ISO 9276-1 der linearen kontinuierlichen Verteilungsdichtekurve q₂(x) über den aus den Gefügeaufnahmen gewonnenen Äquivalenzdurchmesser der Körner x (Korngröße) sind zwei Maxima (auch Modalwerte genannt) der Verteilungskurve als Peaks mit einem dazwischen liegenden Minimum erkennbar. Die Maxima unterscheiden sich erfindungsgemäß in ihrer Lage bezüglich der Korngröße x mindestens um den Faktor 10. Die Höhe der Peaks kann dagegen unterschiedlich sein, was auf einen entsprechend unterschiedlichen Anteil der gröberen und der feineren Körner hinweist. Die bimodale Gesamtverteilungskurve lässt sich mittels mathematischer Extrapolationsverfahren auch als Mischung zweier Korngrößenverteilungskurven darstellen. Bei diesen zwei unterschiedlichen Korngrößenverteilungen des Zirkonoxides im Gefüge der erfindungsgemäßen Zirkonoxid-Keramik weist die eine (grobe) Korngrößenverteilung des Zirkonoxides im Gefüge vorteilhafterweise mittlere Korngrößen (d₅₀) im Bereich zwischen 15 und 200 µm, bevorzugt zwischen 30 und 100 µm auf, und die andere (feine) Korngrößenverteilung des Zirkonoxides im Gefüge vorteilhafterweise mittlere Korngrößen d₅₀ im Bereich zwischen 0,5 bis 5 µm, bevorzugt zwischen 1 bis 3 µm auf. Durch Integration der beiden Korngrößenverteilungskurven können die jeweiligen Flächenanteile der groben und der feinen Körner berechnet werden. Dabei beträgt vorteilhafterweise das Verhältnis von gröberen Zirkonoxidkörnern zu feinen Zirkonoxidkörnern zwischen 1:1 (50/50%) und 2,3:1 (70/30%) des Gesamtzirkonoxidgehaltes im Gefüge. Da über die stereologischen Grundgleichungen der Flächenanteil aus den Gefügebildern gleich dem Volumenanteil im Werkstoff ist, gelten die beschriebenen Größen und Verhältnisse auch für den Volumenanteil der groben und feinen Zirkonoxidkörnern im Werkstoff.

Die deutlich weit auseinanderliegenden Korngrößen des Zirkonoxides im Gefüge sind in Gefügebildern eindeutig erkennbar. Die feineren Zirkonoxidkörner liegen überwiegend feinverteilt und isoliert voneinander in einer Matrix aus Mullit vor.

Das Gefüge der erfindungsgemäßen Zirkonoxid-Keramik kann auch Poren enthalten. In der Regel enthalten gerade Feuerfestwerkstoffe eine größere Menge an Poren, ausgedrückt durch das Gesamtporenvolumen. Insofern beziehen sich die oben genannten Mengenangaben der Keramikbestandteile nur auf die Gesamtsumme an Feststoff ohne die Poren. Das Gesamtporenvolumen der erfindungsgemäßen Zirkonoxid-Keramik liegt zwischen nahezu 0 (dichte Keramik) bis ca. 35%. Die Größe der Poren liegt im Bereich zwischen 0,5 µm und 500 µm. In Gefügebildern sind die Menge und die Größe der Poren eindeutig erkennbar.

Weiterhin ist erfindungsgemäß ein zellularer Werkstoff angegeben, der aus einer Zirkonoxid-Keramik aus ≥ 95 Gew.-% Zirkonoxid und Mullit und ≤ 5 Gew.-% Zusätzen besteht, wobei diese Zirkonoxid-Keramik mindestens teilweise das Stegmaterial ist, aus denen die Zellen des zellularen Werkstoffs aufgebaut sind.
Der zellulare Werkstoff kann dabei vorteilhafterweise in Form einer offenzelligen Schaumkeramik, von extrudierten Wabenkörpern oder von gepressten Siebkernen vorliegen.

Die Stege des zellularen Werkstoffs bestehen dabei vorteilhafterweise vollständig aus der erfindungsgemäßen Zirkonoxid-Keramik und können Hohlräume, Risse und/oder Poren aufweisen. Die Zellularität wird insbesondere dadurch beschrieben, dass über 60% bis 90% des zellularen Werkstoffes aus makroskopischen Zellen mit Strukturbreiten von 1 bis 5 mm besteht, wie sie z.B. bei offenzelligen Schaumkeramiken der Zellweite von 8 bis 30 ppi (pores per inch, gem. ASTM Norm D3576), entsprechend 3,15 bis 11,8 Zellen pro cm oder bei Wabenkeramik mit einer Zelligkeit von 50 bis 300 cpsi (cells per square inch), entsprechend 7,75 bis 46,5 Zellen pro cm², mit Wandstärken von 0,6 mm (bei 50 cpsi) bis 0,2 mm (bei 300 cpsi) entsprechend vorliegen.

Auch hier ist erfindungswesentlich, dass von den ≥ 95 Gew.-% Zirkonoxid und Mullit, woraus die Zirkonoxid-Keramik besteht, 55 bis 90 Gew.-%, vorteilhafterweise 65 bis 85 Gew.-%, Zirkonoxid sind.
Auch hier muss dieser hohe Zirkonoxidanteil im Gefüge erfindungsgemäß mit einer bimodalen Korngrößenverteilung vorliegen, deren Peak-Werte bezüglich der Korngröße mindestens um den Faktor 10 auseinanderliegen. Die unterschiedlichen Korngrößenverteilungen sind in Gefügebildern eindeutig erkennbar.
Dabei liegt vorteilhafterweise das gröbere Zirkonoxid zu 50 bis 90 Vol.-% des Gesamtzirkonoxidgehaltes im Gefüge vor.
Ebenfalls können in dem zellularen Werkstoff als Zusätze mindestens Bestandteile der eingesetzten Ausgangsstoffe in unveränderter Form oder als Reaktionsprodukte vorliegen.

Ebenfalls ist ein erfindungsgemäßes Verfahren zur Herstellung einer Zirkonoxid-Keramik angegeben. Dabei wird aus 30 bis 80 Gew.-% Zirkonoxidpartikeln mit einer Partikelgrößenverteilung mit einem höheren d₅₀-Wert und aus 70 bis 20 Gew.-% einer Mischung aus Zirkonsilikatpulver und Aluminiumoxidpulver, wobei mindestens das Zirkonsilikatpulver eine Partikelgrößenverteilung mit einem niedrigeren d₅₀-Wert als die der Zirkonoxidpartikel aufweist, eine Mischung hergestellt.
Dabei ist erfindungswesentlich, dass als Ausgangsstoffe einerseits bereits fertiges Zirkonoxid in Partikelform mit einer gröberen Partikelgrößenverteilung, d.h. mit einem höheren d₁₀/d₅₀/d₉₀-Wert eingesetzt wird, und andererseits eine Mischung aus Zirkonsilikatpulver und Aluminiumoxidpulver, wobei mindestens das Zirkonsilikatpulver eine Partikelgrößenverteilung mit einer feineren Partikelgrößenverteilung, d.h. jeweils niedrigerem d₁₀/d₅₀/d₉₀ Wert, als das Zirkonoxidpulver aufweist. Dabei unterscheiden sich die d₅₀-Werte des/der feineren Pulver und des groben Zirkonoxidpulvers um mindestens den Faktor 10 voneinander, vorzugsweise von 12-15. Außerdem unterscheiden sich die d₉₀ Werte des feineren Pulvers von dem d₁₀-Wert des groben Pulvers um mindestens den Faktor 1,5.

Die Definition der d₁₀, d₅₀ und d₉₀-Werte einer Partikelgrößenverteilung bezieht sich auf die mittels Laserbeugung gemessene Partikelgrößenverteilungskurve, gem. DIN-ISO 13320, als Verteilungssumme Q₃(x). Danach gibt der d₁₀ Wert an, dass 10 Vol.-% der Partikel kleiner als der angegebene Wert sind, d₅₀, dass 50 Vol.-% kleiner sind und d₉₀, dass 90 Vol.-% kleiner als der angegebene Wert sind.

Aus der Mischung aus Zirkonsilikatpulver und Aluminiumoxidpulver wird mittels Reaktionssintern während der Wärmebehandlung Zirkonoxid und Mullit gebildet. Das gebildete Zirkonoxid aus dieser Reaktion hat dann im Gefüge eine feinere Korngrößenverteilung und dessen d₅₀-Wert liegt um mindestens den Faktor 10 auseinander zum höheren d₅₀-Wert der Partikelgrößenverteilung der Partikel des eingesetzten Zirkonoxids.
Das während der Reaktionssinterung gebildete Zirkonoxid ist in jedem Falle deutlich feinkörniger als das eingesetzte Zirkonoxid, da bereits auch die zur Reaktionssinterung eingesetzten Pulver (Zirkonsilikat und Aluminiumoxid) feinkörniger sind. Während der Reaktionssinterung kann es durch Kornvergröberung zu leichten Veränderung der Partikelgrößen, insbesondere der feineren Pulver kommen. Es hat sich jedoch herausgestellt, dass sich bei dem erfindungsgemäßen Einsatz der Partikelgrößenverteilungen der Ausgangspulver nach dem Sintern das erfindungsgemäße bimodale Gefüge ergibt.

Für die Durchführung der Reaktionssinterung während der Temperaturbehandlung ist eine Mischung aus Zirkonsilikatpulver und Aluminiumoxidpulver erforderlich, damit während der Temperaturbehandlung Zirkonoxid und Mullit entsteht. Diese Mischung der Ausgangsstoffe sollte dabei vorteilhafterweise im stöchiometrischen Verhältnis oder im Masseverhältnis Zirkonsilikatpulver : Aluminiumoxidpulver von 1 : 0,83 eingesetzt werden. Mit einer Mischung im stöchiometrischen Verhältnis wird ein vollständiger Umsatz der Ausgangsstoffe zu den Endprodukten realisiert, was gewünscht wird. Geringe Abweichungen vom stöchiometrischen Verhältnis (Verhältnis von 1 : 0,78 bis 1 : 0,88), sind möglich, wodurch geringfügige Überschüsse von nicht umgesetztem Aluminiumoxid oder Siliciumoxid im gesinterten Composit verbleiben können.

Weiterhin ist es für verschiedene Anwendungen vorteilhaft, wenn als Ausgangsstoff Zirkonoxidpartikel eingesetzt werden, die mindestens teilweise aus stabilisiertem Zirkonoxid bestehen. Dadurch ist aber während der Temperaturbehandlung das Entstehen von beispielsweise Spinell oder Cordierit als Reaktionsprodukt und damit als Zusatz in der erfindungsgemäßen Zirkonoxid-Keramik möglich.

Bei dem erfindungsgemäßen Verfahren können herstellungs- und/oder verarbeitungsbedingte Hilfs- und Zusatzstoffe hinzugefügt werden. Dabei kann es sich um Bindemittel, Sinterhilfsmittel, Stabilisierungsmittel handeln, die für die Grün-/Formkörperherstellung und Sinterung von keramischen Werkstoffen bekannt sind.

Nach der Verarbeitung der Mischung zu einem Formkörper, was mit bekannten keramischen Formgebungsverfahren, wie Pressen, Stampfen, Extrudieren, Schlickerguss erfolgen kann, und/oder mittels des Schwartzwalder-Verfahren oder Gefriertrocknungsverfahren zu zellularen Werkstoffen realisiert werden kann, erfolgt die Temperaturbehandlung bei 1400 bis 1750 °C über 1 bis 5 Stunden Haltezeit.

Bei dem erfindungsgemäßen Verfahren ist von besonderem Vorteil, dass während der Temperaturbehandlung das Zirkonsilikat mit dem Aluminiumoxid zu einer Matrix aus sekundär gebildetem, feinkörnigen Zirkonoxid und Mullit reagiert, während das primäre grobe Zirkonoxid in diese Matrix als "Stützkorn" eingebunden wird.

Ein wesentlicher Vorteil der gesamten erfindungsgemäßen Lösung besteht vor allem darin, dass grobes Zirkonoxidpulver preiswert und einfach zu verarbeiten ist.
Hinzu kommt, dass die Behebung des Nachteils der Lösungen des Standes der Technik im Hinblick auf die Verarbeitungsschwierigkeiten von hoch zirkonoxidhaltiger Keramik dadurch erreicht wird, dass bei der Reaktionssinterung durch die "Magerung" der Reaktionsmischung mit dem groben Zirkonoxid die Schwindung verringert und Verformungen vermieden werden.

Nachfolgend wird die Erfindung an mehreren Ausführungsbeispielen näher erläutert.

### Beispiel 1

115g Aluminiumoxidpulver mit einem d₁₀-Wert von 0,5 µm, d₅₀-Wert von 2,2 µm und d₉₀-Wert von 5,7 µm und 138g Zirkonsilikatpulver mit einem d₁₀-Wert von 0,7 µm, d₅₀-Wert von 2,3 µm und d₉₀-Wert von 6 µm werden gemeinsam mit 0,4 g Salpetersäure (65%-ig) und 56 g Wasser in Aluminiumoxid-Mahltöpfen mit 100 g Aluminiumoxid-Mahlkugeln der Größe 2 mm eine Stunde in der Planetenkugelmühle bei 200 U/min homogenisiert. Anschließend werden die Kugeln abgetrennt und der Feststoffgehalt bestimmt, welcher bei 81,5% liegt. Das entspricht einer Masse an enthaltenem Pulver von 212,5 g, welche 63,3 Gew.-% der fertigen Pulvermischung entsprechen. Danach werden anschließend 123,5 g Zirkonoxidpulver mit einem d₁₀-Wert von 10 µm, d₅₀-Wert von 35 µm und d₉₀-Wert von 58 µm beim Rühren der Suspension unter einem Rührwerk zugegeben, was den restlichen 36,8 Gew.-% Pulver entspricht. Auf die gesamte Pulvermenge wird darüber hinaus noch 5 Gew.-% eines temporären Binders aus Polysaccharid eingerührt, was einem Anteil von 16,8 g entspricht. Diese Suspension hat einen Feststoffgehalt von 86,4 Gew.-%. Sie wird entlüftet und über ein Schlickergießverfahren in nicht saugende Formen zu Barren der Größe 50x30x10 mm vergossen. Die so hergestellten Formkörper werden getrocknet und nach der Entformung in einem Ofen unter Luft bei 1650 °C mit einer Haltezeit von 2 Stunden gesintert.
Dabei findet die Reaktionssinterung von Zirkonsilikat und Aluminiumoxid statt.

Nach der Abkühlung des Sinterkörpers wird dieser wie folgt analysiert. Zunächst wird der Bestand an kristallinen Phasen mittels Röntgenbeugung an gemahlenen Proben bestimmt. Die Proben weisen nur Zirkonoxid und Mullit auf, und keine Restbestandteile von Zirkonsilikat und Korund (Al₂O₃), woraus geschlossen werden kann, dass die Umwandlung vollständig verlaufen ist. Aus den Proben werden weiterhin keramographische Anschliffe präpariert und diese im Rasterelektronenmikroskop untersucht. Das Gefüge besteht aus groben Zirkonoxidkörnern in einer Matrix aus feinkörnigem Mullit und feinkörnigem Zirkonoxid. Die Zuordnung der Phasen erfolgt mittels EDX, wobei sich zeigt, dass der Kontrast zwischen Zirkonoxid (hell), Mullit (grau) und Poren (schwarz) ausreichend für die nachfolgende Bildanalyse aus Gefügebildern ist. Der Porenanteil beträgt etwa 6 %. Der Flächenanteil der gesamten Zirkonoxidpartikel beträgt 56,3 % und der des Mullites 37,7 %, d.h. bei Abzug der Poren ergibt sich ein Verhältnis von Zirkonoxid zu Mullit von 45,3 Vol.-% zu 54,7 Vol.-% Mullit. Über die bekannten Reindichtewerte von Zirkonoxid (5,70 g/cm³) und Mullit (3,16 g/cm³) kann daraus ein Verhältnis 59,9 Gew.-% ZrO₂ zu 40,1 Gew.-% Mullit berechnet werden.

Die Bildanalyse von mindestens 1000 gemessenen Zirkonoxidkörnern zeigt eine bimodale Verteilungsdichtekurve über den Äquivalenzdurchmesser. Die Modalwerte (Peaks) liegen dabei bei 2,4 und 35 µm. Durch nachfolgendes Fitting der beiden überlagerten Kurven werden zwei Einzelverteilungsdichtekurven erhalten und über der Basislinie integriert. Das Verhältnis der Fläche der Kurve des feineren Pulvers zur Fläche der Kurve des groben Pulvers liegt bei 39 : 61, d.h. 39 Vol.-% des Gesamtzirkonoxidanteils bestehen aus den feinen Zirkonoxidkörnern und 61 Vol.-% aus groben Zirkonoxidkörnern.
Die nach Archimedes gemessene Dichte der Körper beträgt 4,05 g/cm³.
An den Prüfkörper wird eine hohe 4-Punkt-Biege-Festigkeit von 60 MPa bei 1200 °C unter Luft gemessen. Typische reaktionsgebundene Mullit-Zirkonoxid-Werkstoffe mit geringerem Zirkonoxidgehalt und nicht bimodaler Korngrößenverteilung liegen typischerweise bei 20-30 MPa.

### Beispiel 2

272 g Aluminiumoxidpulver mit einem d₁₀-Wert von 0,4 µm, d₅₀-Wert von 0,8 µm und d₉₀-Wert von 3 µm wird mit 227g Zirkonsilikatpulver mit einem d₁₀-Wert von 1,5 µm, d₅₀-Wert von 2 µm und d₉₀-Wert von 10 µm und 1100 g eines Zirkonoxidpulvers mit einem d₁₀-Wert von 16 µm, d₅₀-Wert von 42 µm und d₉₀-Wert von 80 µm in einem Eirich-Mischer bei Umdrehungsgeschwindigkeiten von 300 U/min gemischt. Anschließend wird ein Gemisch aus 170 g Wasser, 64 g Salpetersäure (65%-ig), 80 g Polysaccharid, 65 g Polyurethanlösung und 4 g Nonanol zugegeben, bis eine Suspension entsteht. Diese wird bei 3500 U/min für 10 Minuten gemischt. In diese Suspension werden anschließend Polyurethanschaumkörper der Größe 50x50x20 mm der Zellweite 10 ppi eingetaucht und ausgepresst, sodass nur noch die Polyurethanstege mit der Suspension bedeckt sind. Anschließend werden die Formkörper getrocknet und das Polyurethan anschließend unter Luft ausgebrannt.

Die so entstandene abgeformte Schaumstruktur weist Stege aus der Mischung der Ausgangsstoffe auf, die von Hohlräumen (vom thermisch zersetzten Polyurethan), Rissen und Poren durchsetzt sind. Die Stege umgrenzen die Zellen der Schaumstruktur.
Nachfolgend wird die Schaumstruktur in einem Ofen bei 1650 °C für 3h gesintert und dabei findet die Reaktionssinterung von Zirkonsilikat und Aluminiumoxid statt. Nach der Abkühlung der Sinterkörper werden diese analog der in Beispiel 1 angeführten Methoden analysiert.
Die Proben weisen nur Zirkonoxid und Mullit auf, und keine Restbestandteile von Zirkonsilikat und Korund (Al₂O₃), woraus geschlossen werden kann, dass die Umwandlung vollständig verlaufen ist. Das Gefüge der Stege besteht aus groben Zirkonoxidkörnern in einer Matrix aus feinkörnigem Mullit und feinkörnigem Zirkonoxid. Daneben enthalten die Stege noch die Poren im Gefüge, sowie kleiner Risse und die Hohlräume, die durch das Ausbrennen des Polyurethans entstanden sind. Der Porenanteil im Gefüge der Stege beträgt etwa 9 %. Der Flächenanteil der gesamten Zirkonoxidpartikel im Gefüge der Stege beträgt 63 % und der des Mullites 28 %, d.h. bei Abzug der Poren ergibt sich ein Verhältnis von Zirkonoxid zu Mullit von 69 Vol.-% zu 31 Vol.-%, entsprechend 80,2 Gew.-% ZrO₂ zu 19,8 Gew.-% Mullit.
Die Bildanalyse der Zirkonoxidkörner zeigt eine bimodale Verteilungsdichtekurve über den Äquivalenzdurchmesser. Die Modalwerte (Peaks) liegen dabei bei 1,8 und 40 µm. Durch nachfolgendes Fitting der beiden überlagerten Kurven werden zwei Einzelverteilungsdichtekurven erhalten und über der Basislinie integriert. Das Verhältnis der Fläche der Kurve des feineren Pulvers zur Fläche der Kurve des groben Pulvers liegt bei 14 : 86, d.h. 14 Vol.-% des Gesamtzirkonoxidanteils bestehen aus den feinen Zirkonoxidkörnern und 86 Vol.-% aus groben Zirkonoxidkörnern.
Die mittels Heliumpyknometrie gemessene Reindichte des aus den Proben aufgemahlenen Pulvers liegt bei 4,48 g/cm³. Die mittels Wägung und geometrischer Messung bestimmte Dichte der zellulären Schaumkeramikkörper lag bei 0,79 g/cm³.

Die bei 1200°C an Luft gemessene Druckfestigkeit bei Eindruck eines Stempels von Durchmesser 20 mm betrug 4,5 MPa. Die Kriechbeständigkeit wurde ebenfalls unter Auflage eines Stempels mit Durchmesser 20 mm unter einer Last von 600 N bei 1200 °C bestimmt. Dabei ergibt sich eine Verformungsrate von ca. 1,7*10⁻⁷ m/s.

Vergleichbare reaktionsgebundene ZrO₂-Mullit-Schaumkeramiken nach dem Stand der Technik weisen Verformungsraten von 2,5-3*10⁻⁷ m/s auf

Eine solche Schaumstruktur ist ein zellulärer Werkstoff im erfindungsgemäßen Sinne und kann vorteilhaft als Gießfilter für Stahlschmelzen eingesetzt werden.

## Patentansprüche

1. Zirkonoxid-Keramik, bestehend aus ≥ 95 Gew.-% Zirkonoxid und Mullit und ≤ 5 Gew.-% Zusätzen, wobei von den ≥ 95 Gew.-% Zirkonoxid und Mullit mindestens 55 bis 90 Gew.-% Zirkonoxid sind, und das Zirkonoxid im Gefüge mit mindestens einer bimodalen Korngrößenverteilung vorliegt, deren Peak-Werte bezüglich der Korngröße mindestens um den Faktor 10 auseinanderliegen, so dass mindestens gröberes und feineres Zirkonoxid im Gefüge vorliegt, und als Zusätze mindestens Bestandteile der eingesetzten Ausgangsstoffe in unveränderter Form oder als Reaktionsprodukte vorliegen.

2. Zirkonoxid-Keramik nach Anspruch 1, bei der 65 bis 85 Gew.-% Zirkonoxid in der Zirkonoxid-Keramik vorliegen, wobei vom Gesamtgehalt an Zirkonoxid 50 bis 90 Vol.-%, vorteilhafterweise 55 bis75 Vol.-%, an gröberem Zirkonoxid im Gefüge vorliegen.

3. Zirkonoxid-Keramik nach Anspruch 1, bei der die Korngrößenverteilung des Zirkonoxides im Gefüge mit dem gröberen Peak-Wert mittlere Korngrößen im Bereich zwischen 15 und 200 µm, bevorzugt zwischen 30 und 100 µm aufweist, und die Korngrößenverteilung des Zirkonoxides im Gefüge mit dem feineren Peak-Wert mittlere Korngrößen im Bereich zwischen 0,5 bis 5 µm, bevorzugt zwischen 1 bis 3 µm aufweist.

4. Zirkonoxid-Keramiken nach Anspruch 1, bei der als Zusätze als Bestandteile der eingesetzten Ausgangsstoffe Zirkonsilikat, Aluminiumoxid oder als Reaktionsprodukte Spinelle oder Cordierit vorliegen.

5. Zellularer Werkstoff, bestehend aus einer Zirkonoxid-Keramik aus ≥ 95 Gew.-% Zirkonoxid und Mullit und ≤ 5 Gew.-% Zusätzen, wobei von den ≥ 95 Gew.-% Zirkonoxid und Mullit mindestens 55 bis 90 Gew.-% Zirkonoxid sind, und das Zirkonoxid im Gefüge mit mindestens einer bimodalen Korngrößenverteilung vorliegt, deren Peak-Werte bezüglich der Korngröße mindestens um den Faktor 10 auseinanderliegen, so dass mindestens gröberes und feineres Zirkonoxid im Gefüge vorliegt, wobei diese Zirkonoxid-Keramik mindestens teilweise das Stegmaterial ist, aus denen die Zellen des zellularen Werkstoffs aufgebaut sind.

6. Zellularer Werkstoff nach Anspruch 5, bei dem die Stege vollständig aus der Zirkonoxid-Keramik bestehen und Hohlräume, Risse und/oder Poren aufweisen, und/oder der zellulare Werkstoff in Form einer offenzelligen Schaumkeramik, von extrudierten Wabenkörpern oder von gepressten Siebkernen vorliegt.

7. Zellularer Werkstoff nach Anspruch 5, bei dem 65 bis 85 Gew.-% Zirkonoxid in der Zirkonoxid-Keramik vorliegen, wobei vom Gesamtgehalt an Zirkonoxid 50 bis 90 Vol.-%, vorteilhafterweise 55 bis 75 Vol.-%, an gröberem Zirkonoxid im Gefüge vorliegen.

8. Zellularer Werkstoff nach Anspruch 5, bei dem die Korngrößenverteilung des Zirkonoxides im Gefüge mit dem gröberen Peak-Wert mittlere Korngrößen im Bereich zwischen 15 und 200 µm, bevorzugt zwischen 30 und 100 µm aufweisen, und die Korngrößenverteilung des Zirkonoxides im Gefüge mit dem feineren Peak-Wert mittlere Korngrößen im Bereich zwischen 0,5 bis 5 µm, bevorzugt zwischen 1 bis 3 µm, aufweisen.

9. Zellularer Werkstoff nach Anspruch 5, bei dem als Zusätze als Bestandteile der eingesetzten Ausgangsstoffe Zirkonsilikat, Aluminiumoxid oder als Reaktionsprodukte Spinelle oder Cordierit vorliegen.

10. Verfahren zur Herstellung einer Zirkonoxid-Keramik, bei dem aus mindestens 30 bis 80 Gew.-% Zirkonoxidpartikel mit einer Partikelgrößenverteilung mit einem höheren d₅₀-Wert und 70 bis 20 Gew.-% einer Mischung aus Zirkonsilikatpulver und Aluminiumoxidpulver, wobei mindestens das Zirkonsilikatpulver eine Partikelgrößenverteilung mit einem niedrigeren d₅₀-Wert als die Zirkonoxidpartikel aufweist, eine Mischung hergestellt wird, wobei herstellungs- und/oder verarbeitungsbedingte Hilfs- und Zusatzstoffe hinzugefügt werden können, und diese Mischung mindestens teilweise zu einem Formkörper verarbeitet wird, und nachfolgend der Formkörper einer Temperaturbehandlung bei 1400 bis 1750 °C für 1 bis 5 Stunden unterzogen wird.

11. Verfahren nach Anspruch 10, bei dem die Mischung aus Zirkonsilikatpulver und Aluminiumoxidpulver während der Temperaturbehandlung zu Zirkonoxid und Mullit umgesetzt wird, und die Ausgangsstoffe im stöchiometrischen Verhältnis oder im Masseverhältnis Zirkonsilikatpulver : Aluminiumoxidpulver von 1 : 0,83 eingesetzt werden.

12. Verfahren nach Anspruch 10, bei dem als Zirkonoxidpartikel Partikel aus stabilisiertem Zirkonoxid eingesetzt werden.

13. Verfahren nach Anspruch 10, bei dem Zirkonoxidpartikel mit einer Partikelgrößenverteilung mit einem d₅₀-Wert im Bereich zwischen 15 und 200 µm, bevorzugt zwischen 30 und 100 µm, eingesetzt werden, und Zirkonsilikatpulver und Aluminiumoxidpulver mit einer Partikelgrößenverteilung mit einem d₅₀-Wert im Bereich zwischen 0,5 bis 5 µm, bevorzugt zwischen 1 bis 3 µm, eingesetzt werden, und/oder sich die d₉₀-Werte des Zirkonsilikatpulvers und/oder Aluminiumoxidpulvers von dem d₁₀-Wert des Zirkonoxids um mindestens den Faktor 1,5 unterscheiden.

14. Verfahren nach Anspruch 10, bei dem als herstellungs- und/oder verarbeitungsbedingte Hilfs- und Zusatzstoffe, Bindemittel, Sinterhilfsmittel, Stabilisierungsmittel eingesetzt werden.

15. Verfahren nach Anspruch 10, bei dem die Mischung zu Formkörpern mittels keramischer Formgebungsverfahren, wie Pressen, Extrudieren, Schlickerguss verarbeitet wird und/oder die Mischung mittels des Schwartzwalder-Verfahren oder mittels Gefriertrocknungsverfahren zu zellularen Werkstoffen verarbeitet wird.

## Claims

1. Zirconium oxide ceramic consisting of ≥ 95% by weight of zirconium oxide and mullite and ≤ 5% by weight of additives, wherein at least from 55 to 90% by weight of the ≥ 95% by weight of zirconium oxide and mullite are zirconium oxide and the zirconium oxide is present in the microstructure with an at least bimodal grain size distribution whose peak values in respect of the grain size differ by a factor of least 10, so that at least relatively coarse and relatively fine zirconium oxide are present in the microstructure, and at least constituents of the starting materials used are present as additives in unchanged form or in the form of reaction products.

2. Zirconium oxide ceramic according to Claim 1, wherein from 65 to 85% by weight of zirconium oxide are present in the zirconium oxide ceramic, with from 50 to 90% by volume, advantageously from 55 to 75% by volume, based on the total zirconium oxide content, of relatively coarse zirconium oxide are present in the microstructure.

3. Zirconium oxide ceramic according to Claim 1, wherein the grain size distribution of the zirconium oxide in the microstructure having the coarser peak value has average grain size in the range from 15 to 200 µm, preferably from 30 to 100µm, and the grain size distribution of the zirconium oxide in the microstructure having the finer peak value has average grain size in the range from 0.5 to 5 µm, preferably from 1 to 3 µm.

4. Zirconium oxide ceramics according to Claim 1, wherein zirconium silicate, aluminium oxide as constituents of the starting materials used or spinels or cordierite as reaction products are present as additives.

5. Cellular material consisting of a zirconium oxide ceramic of ≥ 95% by weight of zirconium oxide and mullite and ≤ 5% by weight of additives, wherein at least from 55 to 90% by weight of the ≥ 95% by weight of zirconium oxide and mullite are zirconium oxide and the zirconium oxide is present in the microstructure with an at least bimodal grain size distribution whose peak values in respect of the grain size differ by a factor of least 10, so that at least relatively coarse and relatively fine zirconium oxide are present in the microstructure, where this zirconium oxide ceramic is at least partially the strut material of which the cells of the cellular material are made up.

6. Cellular material according to Claim 5, wherein the struts consist entirely of the zirconium oxide ceramic and have voids, cracks and/or pores, and/or the cellular material is present in the form of an open-celled foam ceramic, of extruded honeycomb bodies or of pressed sieve cores.

7. Cellular material according to Claim 5, wherein from 65 to 85% by weight of zirconium oxide are present in the zirconium oxide ceramic, with from 50 to 90% by volume, advantageously from 55 to 75% by volume, based on the total zirconium oxide content, of relatively coarse zirconium oxide being present in the microstructure.

8. Cellular material according to Claim 5, wherein the grain size distribution of the zirconium oxide in the microstructure having the coarser peak value has average grain size in the range from 15 to 200 µm, preferably from 30 to 100µm, and the grain size distribution of the zirconium oxide in the microstructure having the finer peak value has average grain size in the range from 0.5 to 5 µm, preferably from 1 to 3 µm.

9. Cellular material according to Claim 5, wherein zirconium silicate, aluminium oxide as constituents of the starting materials used or spinels or cordierite as reaction products are present as additives.

10. Process for producing a zirconium oxide ceramic, wherein a mixture is produced from at least from 30 to 80% by weight of zirconium oxide particles having a particle size distribution having a relatively high d₅₀ value and from 70 to 20% by weight of a mixture of zirconium silicate powder and aluminium oxide powder, where at least the zirconium silicate powder has a particle size distribution having a lower d₅₀ value than the zirconium oxide particles, with production- and/or processing-related auxiliaries and adjuvants being able to be added, and this mixture is processed at least partly to give a shaped body and the shaped body is subsequently subjected to a heat treatment at from 1400 to 1750°C for from 1 to 5 hours.

11. Process according to Claim 10, wherein the mixture of zirconium silicate powder and aluminium oxide powder is converted during the heat treatment into zirconium oxide and mullite and the starting materials are used in the stoichiometric ratio or in a mass ratio of zirconium silicate powder:aluminium oxide powder of 1:0.83.

12. Process according to Claim 10, wherein particles composed of stabilized zirconium oxide are used as zirconium oxide particles.

13. Process according to Claim 10, wherein zirconium oxide particles having a particle size distribution having a d₅₀ value in the range from 15 to 200 µm, preferably from 30 to 100 µm, are used and zirconium silicate powder and aluminium oxide powder having a particle size distribution having a d₅₀ value in the range from 0.5 to 5 µm, preferably from 1 to 3 µm, are used and/or the d₉₀ values of zirconium silicate powder and/or aluminium oxide powder differ from the d₁₀ value of the zirconium oxide by a factor of at least 1.5.

14. Process according to Claim 10, wherein binders, sintering aids, stabilizers are used as production- and/or processing-related auxiliaries and adjuvants.

15. Process according to Claim 10, wherein the mixture is processed to give shaped bodies by means of ceramic shaping processes such as pressing, extrusion, slip casting and/or the mixture is processed by means of the Schwartzwalder process or by means of freeze drying processes to give cellular materials.

## Revendications

1. Céramique d'oxyde de zirconium, constituée par ≥ 95 % en poids d'oxyde de zirconium et de mullite et ≤ 5 % en poids d'additifs, parmi les ≥ 95 % en poids d'oxyde de zirconium et de mullite, au moins 55 à 90 % en poids étant de l'oxyde de zirconium, et l'oxyde de zirconium se présentant dans la structure avec au moins une distribution des tailles de grains bimodale, dont les valeurs de pic au regard de la taille de grain sont éloignées au moins d'un facteur de 10, de telle sorte qu'au moins un oxyde de zirconium plus grossier et un oxyde de zirconium plus fin soient présents dans la structure, et au moins des constituants des matières premières utilisées sous forme non modifiée ou sous la forme de produits de réaction étant présents en tant qu'additifs.

2. Céramique d'oxyde de zirconium selon la revendication 1, dans laquelle 65 à 85 % en poids d'oxyde de zirconium est présent dans la céramique d'oxyde de zirconium, 50 à 90 % en volume, plus avantageusement 55 à 75 % en volume, d'oxyde de zirconium plus grossier étant présent dans la structure par rapport à la teneur totale en oxyde de zirconium.

3. Céramique d'oxyde de zirconium selon la revendication 1, dans laquelle la distribution des tailles de grains de l'oxyde de zirconium dans la structure présente avec la valeur de pic plus grossière des tailles de grains moyennes dans la plage comprise entre 15 et 200 µm, de préférence entre 30 et 100 µm, et la distribution des tailles de grains de l'oxyde de zirconium dans la structure présente avec la valeur de pic plus fine des tailles de grains moyennes dans la plage comprise entre 0,5 et 5 µm, de préférence entre 1 et 3 µm.

4. Céramiques d'oxyde de zirconium selon la revendication 1, dans lesquelles du silicate de zirconium, de l'oxyde d'aluminium en tant que constituants des matières premières utilisées ou de la spinelle ou de la cordiérite en tant que produits de réaction sont présents en tant qu'additifs.

5. Matériau cellulaire, constitué par une céramique d'oxyde de zirconium constituée par ≥ 95 % en poids d'oxyde de zirconium et de mullite et ≤ 5 % en poids d'additifs, parmi les ≥ 95 % en poids d'oxyde de zirconium et de mullite, au moins 55 à 90 % en poids étant de l'oxyde de zirconium, et l'oxyde de zirconium se présentant dans la structure avec au moins une distribution des tailles de grains bimodale, dont les valeurs de pic au regard de la taille de grain sont éloignées au moins d'un facteur de 10, de telle sorte qu'au moins un oxyde de zirconium plus grossier et un oxyde de zirconium plus fin soient présents dans la structure, cette céramique d'oxyde de zirconium étant au moins en partie le matériau de traverse à partir duquel les cellules du matériau cellulaire sont formées.

6. Matériau cellulaire selon la revendication 5, dans lequel les traverses sont entièrement constituées par la céramique d'oxyde de zirconium et comprennent des cavités, des fissures et/ou des pores, et/ou le matériau cellulaire se présente sous la forme d'une céramique moussée à cellules ouvertes, de corps alvéolaires extrudées ou de noyaux de tamis comprimés.

7. Matériau cellulaire selon la revendication 5, dans lequel 65 à 85 % en poids d'oxyde de zirconium est présent dans la céramique d'oxyde de zirconium, 50 à 90 % en volume, plus avantageusement 55 à 75 % en volume, d'oxyde de zirconium plus grossier étant présent dans la structure, par rapport à la teneur totale en oxyde de zirconium.

8. Matériau cellulaire selon la revendication 5, dans lequel la distribution des tailles de grains de l'oxyde de zirconium dans la structure présente avec la valeur de pic plus grossière des tailles de grains moyennes dans la plage comprise entre 15 et 200 µm, de préférence entre 30 et 100 µm, et la distribution des tailles de grains de l'oxyde de zirconium dans la structure présente avec la valeur de pic plus fine des tailles de grains moyennes dans la plage comprise entre 0,5 et 5 µm, de préférence entre 1 et 3 µm.

9. Matériau cellulaire selon la revendication 5, dans laquelle du silicate de zirconium, de l'oxyde d'aluminium en tant que constituants des matières premières utilisées ou de la spinelle ou de la cordiérite en tant que produits de réaction sont présents en tant qu'additifs.

10. Procédé de fabrication d'une céramique d'oxyde de zirconium, selon lequel un mélange est fabriqué à partir d'au moins 30 à 80 % en poids de particules d'oxyde de zirconium présentant une distribution des tailles de particules ayant une valeur d₅₀ plus élevée et de 70 à 20 % en poids d'un mélange d'une poudre de silicate de zirconium et d'une poudre d'oxyde d'aluminium, au moins la poudre de silicate de zirconium présentant une distribution des tailles de particules ayant une valeur d₅₀ plus faible que les particules d'oxyde de zirconium, des adjuvants et des additifs liés à la fabrication et/ou à l'usinage pouvant être ajoutés, et ce mélange est usiné au moins partiellement en un corps moulé, puis le corps moulé est soumis à un traitement thermique à 1 400 à 1 750 °C pendant 1 à 5 heures.

11. Procédé selon la revendication 10, selon lequel le mélange d'une poudre de silicate de zirconium et d'une poudre d'oxyde d'aluminium est transformé pendant le traitement thermique en oxyde de zirconium et mullite, et les matières premières sont utilisées en un rapport stœchiométrique ou en un rapport en masse poudre de silicate de zirconium:poudre d'oxyde d'aluminium de 1:0,83.

12. Procédé selon la revendication 10, selon lequel des particules d'oxyde de zirconium stabilisées sont utilisées en tant que particules d'oxyde de zirconium.

13. Procédé selon la revendication 10, selon lequel des particules d'oxyde de zirconium présentant une distribution des tailles de particules ayant une valeur d₅₀ dans la plage comprise entre 15 et 200 µm, de préférence entre 30 et 100 µm, sont utilisées, et une poudre de silicate de zirconium et une poudre d'oxyde d'aluminium présentant une distribution des tailles de particules ayant une valeur d₅₀ dans la plage comprise entre 0,5 et 5 µm, de préférence entre 1 et 3 µm, sont utilisées, et/ou les valeurs d₉₀ de la poudre de silicate de zirconium et/ou de la poudre d'oxyde d'aluminium diffèrent de la valeur d₁₀ de l'oxyde de zirconium d'au moins un facteur de 1,5.

14. Procédé selon la revendication 10, selon lequel des liants, des adjuvants de frittage, des agents de stabilisation sont utilisés en tant qu'adjuvants et additifs liés à la fabrication et/ou à l'usinage.

15. Procédé selon la revendication 10, selon lequel le mélange est usiné en corps moulés au moyen de procédés de façonnage céramiques, tels qu'une compression, une extrusion, une coulée en barbotine, et/ou le mélange est usiné en matériaux cellulaires au moyen du procédé de Schwartzwalder ou au moyen du procédé de lyophilisation.
